# EUROPEAN PATENT SPECIFICATION

(11) **EP 3 471 345 B1**
(45) Date of publication and mention of the grant of the patent: **09.03.2022**
(21) Application number: 18754170.1
(22) Date of filing: 23.01.2018
(51) Int. Cl.: G06F 9/455, H04L 12/24, H04L 12/911

(54) **SLA-BASED RESOURCE ALLOCATION METHOD AND NFVO**
SLA-BASIERTES RESSOURCENZUWEISUNGSVERFAHREN UND NFVO
PROCÉDÉ D'ATTRIBUTION DE RESSOURCES FONDÉ SUR UN SLA ET NFVO

(30) Priority: 20.02.2017 CN 201710091068
(43) Date of publication of application: 17.04.2019
(73) Proprietor: Huawei Technologies Co., Ltd., Longgang District Shenzhen, Guangdong 518129 (CN)
(72) Inventor: XIA, Haiguang, Shenzhen Guangdong 518129 (CN); XIE, Ning, Shenzhen Guangdong 518129 (CN); DUN, Jin, Shenzhen Guangdong 518129 (CN)
(74) Representative: Thun, Clemens
(86) International application number: PCT/CN2018/073681
(87) International publication number: WO 2018/149272

(56) References cited:
- EP-A1- 3 038 291
- CN-A- 105 453 485
- CN-A- 105 743 962
- US-A1- 2016 205 004
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740,

## Description

### TECHNICAL FIELD

Embodiments of the present invention relate to communications technologies, and in particular, to a Service Level Agreement (Service Level Agreement, SLA for short)-based resource allocation method and a Network Functions Virtualization Orchestrator (Network Functions Virtualization Orchestrator, NFVO for short).

### BACKGROUND

In a Network Functions Virtualization (Network Functions Virtualization, NFV for short) technology, software processing of many functions is carried by using commodity hardware and a virtualization technology, so that high costs of devices of a network are reduced.

An architecture of an NFV system mainly includes the following several function components:

NFVO, which is responsible for life cycle management of a Network Service (Network Service, NS for short), resource orchestration and management, and real-time monitoring of resources and information about a running status of a Network Functions Virtualization Infrastructure (NFV Infrastructure, NFVI for short). The NFVO cooperates with a Virtualized Network Function Manager (Virtualized Network Function Manager, VNFM for short) to monitor life cycle management of a Virtualized Network Function (Virtualized Network Function, VNF for short) and a global view of resources.

VNFM, which is responsible for life cycle management of the VNF, for example, initialization of a VNF instance, scale-out/scale-in of the VNF instance, termination of the VNF instance, and management of information about a running status of the VNF.

Virtualized Infrastructure Manager (Virtualized Infrastructure Manager, VIM for short), which is responsible for management and monitoring of hardware resources and virtualized resources at an infrastructure layer and fault reporting, and providing a virtualized resource pool for an upper-layer application. For example, the Virtualized Infrastructure Manager is responsible for managing and allocating NFVI resources, and monitoring and collecting information about a running status of the NFVI. NFVI resources include hardware resources, virtual resources, and a virtualization layer, and include all states of the NFVI resources, for example, available/reserved/allocated NFVI resources. In terms of the VNF, the virtualization layer and the hardware resources are considered as an entity that can provide required virtual resources.

In the NFV system, the VNF is a software implementation of a Network Function (NF, Network Function) that can be run on the NFVI, is equivalent to an entity of a network node, and is expected to be delivered as pure hardware-independent software.

EP 3 038 291 A1 refers to apparatuses, methods and storage media (transitory and non-transitory) that are associated with end-to-end datacenter performance control. The apparatus for computing may receive a datacenter performance target, determine an end-to-end datacenter performance level based at least in part on quality of service data collected from a plurality of nodes, and send a mitigation command based at least in part on a result of a comparison of the end-to-end datacenter performance level determined to the datacenter performance target. The apparatus for computing may include one or more processors, a memory, a datacenter performance monitor to receive a datacenter performance target corresponding to a service level agreement, and a mitigation module to send a mitigation command based at least in part on a result of a comparison of an end-to-end datacenter performance level to a datacenter performance target.

Further, prior art document "Network Functions Virtualisation (NFV); Management and Orchestration", European Telecommunciations Standards Institute (ETSI), 1. Dezember 2014 refers to the network functions virtualisation, management and orchestration.

In the prior art, during instantiation, scale-out, and migration of an NS/VNF by an NFVO, when the NFVO needs to apply to a VIM for an NFVI virtual resource, the NFVO informs the VIM of only a quantity of required NFVI virtual resources. The VIM returns a corresponding quantity of NFVI virtual resources to the NFVI based on the quantity of NFVI virtual resources that are required by the NFVO. However, the NFVI virtual resource applied for by the NFVO may not satisfy service quality of the NS/VNF. The NFVO may need to apply to the VIM for NFVI virtual resources for a plurality of times, leading to a low qualification hit rate of application for an NFVI virtual resource.

### SUMMARY

Embodiments of the present invention provide an SLA-based resource allocation method and an NFVO. The NFVO considers an NFVI SLA parameter when applying for a virtual resource, so that an obtained virtual resource meets a user requirement and a qualification hit rate of resource application is improved.

This problem is solved by the subject matter of the independent claims. Further implementation forms are provided in the dependent claims.

According to a first aspect, an embodiment of the present invention provides an SLA-based resource allocation method as disclosed by independent claim 1.

In the method, the NFVO considers the NFVI SLA parameter when applying for the virtual resource, so that the obtained virtual resource meets a user requirement and a qualification hit rate of resource application is improved.

Optionally, the network service is an NS, the network service instantiation request is an NS instantiation request, the identifier of the SLA of the network service is an identifier of an NS SLA, and the determining, by the NFVO based on the identifier of the SLA of the network service, an NFVI SLA parameter required for instantiating the network service is specifically:
obtaining, by the NFVO, a Network Service Descriptor NSD of the NS, where the NSD includes information about the NS SLA, a VNF included in the NS, and an association relationship
between the NS SLA and a Virtualized Network Function VNF SLA;
   determining, by the NFVO based on the identifier of the NS SLA and the NSD, a VNF SLA of the VNF included in the NS;
   obtaining, by the NFVO, a Virtualized Network Function Descriptor VNFD of the VNF included in the NS, where the VNFD includes information about the VNF SLA, and an association relationship between the VNF SLA and a Network Functions Virtualization Infrastructure NFVI SLA; and
   determining, by the NFVO based on an identifier of the VNF SLA of the VNF included in the NS and the VNFD of the VNF included in the NS, the NFVI SLA parameter of the VNF included in the NS.

Optionally, the information about the NS SLA includes the identifier, a keyword, and a specific value of the NS SLA, and the association relationship between the NS SLA and the VNF SLA includes: the identifier of the VNF SLA of the VNF included in the NS, and an association computing model of an NS SLA parameter and a VNF SLA parameter; and

the information about the VNF SLA includes the identifier, a keyword, and a specific value of the VNF SLA, and the association relationship between the VNF SLA and the NFVI SLA includes: a relationship identifier, and an association computing model of the VNF SLA parameter and the NFVI SLA parameter.

Optionally, the network service is a Virtualized Network Function VNF, the network service instantiation request is a VNF instantiation request, the identifier of the SLA of the network service is an identifier of a VNF SLA, and the determining, by the NFVO based on the identifier of the SLA of the network service, an NFVI SLA parameter required for instantiating the network service is specifically:
obtaining, by the NFVO, a Virtualized Network Function Descriptor VNFD of the VNF, where the VNFD includes information about the VNF SLA, and an association relationship between the VNF SLA and a Network Functions Virtualization Infrastructure NFVI SLA; and
determining, by the NFVO, the NFVI SLA parameter of the VNF based on the identifier of the VNF SLA and the VNFD.

Optionally, the information about the VNF SLA includes the identifier, a keyword, and a specific value of the VNF SLA, and the association relationship between the VNF SLA and the NFVI SLA includes: a relationship identifier, and an association computing model of a VNF SLA parameter and the NFVI SLA parameter.

Optionally, the method further includes:
receiving, by the NFVO, the SLA parameter information of the NFVI resource pools reported by the VIM;
grouping, by the NFVO, SLA parameters of virtual resources in the NFVI resource pools based on a preset grouping rule, where
correspondingly, the determining, by the NFVO based on the NFVI SLA parameter and SLA parameter information of NFVI resource pools obtained from the VIM in advance, information about the virtual resource meeting the requirement of the NFVI SLA parameter in the NFVI resource pools is specifically:
   determining, by the NFVO based on the NFVI SLA parameter, a target group meeting the requirement of the NFVI SLA parameter in the groups.

Optionally, the preset grouping rule is performing grouping based on regions of the virtual resources or clusters of the virtual resources.

According to a second aspect, an embodiment of the present invention provides a Network Functions Virtualization Orchestrator NFVO as disclosed by independent claim 8.

Optionally, the network service is a Network Service NS, the network service instantiation request is an NS instantiation request, the identifier of the SLA of the network service is an identifier of an NS SLA, and the determining module is specifically configured to:
obtain a Network Service Descriptor NSD of the NS, where the NSD includes information about the NS SLA, a VNF included in the NS, and an association relationship between the NS SLA and a Virtualized Network Function VNF SLA;
determine, based on the identifier of the NS SLA and the NSD, a VNF SLA of the VNF included in the NS;
obtain a Virtualized Network Function Descriptor VNFD of the VNF included in the NS, where the VNFD includes information about the VNF SLA, and an association relationship between the VNF SLA and a Network Functions Virtualization Infrastructure NFVI SLA; and
determine, based on an identifier of the VNF SLA of the VNF included in the NS and the VNFD of the VNF included in the NS, the NFVI SLA parameter of the VNF included in the NS.

Optionally, the information about the NS SLA includes the identifier, a keyword, and a specific value of the NS SLA, and the association relationship between the NS SLA and the VNF SLA includes: the identifier of the VNF SLA of the VNF included in the NS, and an association computing model of an NS SLA parameter and a VNF SLA parameter; and
the information about the VNF SLA includes the identifier, a keyword, and a specific value of the VNF SLA, and the association relationship between the VNF SLA and the NFVI SLA includes: a relationship identifier, and an association computing model of the VNF SLA parameter and the NFVI SLA parameter.

Optionally, the network service is a Virtualized Network Function VNF, the network service instantiation request is a VNF instantiation request, the identifier of the SLA of the network service is an identifier of a VNF SLA, and the determining module is specifically configured to:
obtain a Virtualized Network Function Descriptor VNFD of the VNF, where the VNFD includes information about the VNF SLA, and an association relationship between the VNF SLA and a Network Functions Virtualization Infrastructure NFVI SLA; and
determine the NFVI SLA parameter of the VNF based on the identifier of the VNF SLA and the VNFD.

Optionally, the information about the VNF SLA includes the identifier, a keyword, and a specific value of the VNF SLA, and the association relationship between the VNF SLA and the NFVI SLA includes: a relationship identifier, and an association computing model of a VNF SLA parameter and the NFVI SLA parameter.

Optionally, the obtaining module is specifically configured to:
send a first resource request message to the VIM, where the first resource request message includes the NFVI SLA parameter; and
receive a first resource response message sent by the VIM, where the first resource response message includes information about the virtual resource meeting the requirement of the NFVI SLA parameter.

Optionally, the obtaining module is specifically configured to:
determine, based on the NFVI SLA parameter and SLA parameter information of NFVI resource pools obtained from the VIM in advance, information about the virtual resource meeting the requirement of the NFVI SLA parameter in the NFVI resource pools;
send a second resource request message to the VIM, where the second resource request message includes the information about the virtual resource, and the second resource request message is used to query availability of the virtual resource and reserve the virtual resource; and
receive a second resource response message sent by the VIM.

Optionally, the NFVO further includes a grouping module;
the receiving module is further configured to receive the SLA parameter information of the NFVI resource pools reported by the VIM;
the grouping module is configured to group SLA parameters of virtual resources in the NFVI resource pools based on a preset grouping rule; and
correspondingly, the obtaining module is specifically configured to determine, based on the NFVI SLA parameter, a target group meeting the requirement of the NFVI SLA parameter in the groups.

Optionally, the preset grouping rule is performing grouping based on regions of the virtual resources or clusters of the virtual resources.

Another example, not covered by the claims provides an NFVO, including: a transmitter, a receiver, a memory, and a processor, where the memory is configured to store a program instruction, the transmitter is configured to send data to another device, the receiver is configured to receive data sent by the another device, and the processor is configured to invoke the program instruction in the memory to perform the following method:
receiving a network service instantiation request, where the network service instantiation request includes an identifier of an SLA of a network service;
determining, based on the identifier of the SLA of the network service, an NFVI SLA parameter required for instantiating the network service;
obtaining, from a VIM based on the NFVI SLA parameter, a virtual resource meeting a requirement of the NFVI SLA parameter; and
instantiating the network service based on the obtained virtual resource.

Optionally, the network service is a Network Service NS, the network service instantiation request is an NS instantiation request, the identifier of the SLA of the network service is an identifier of an NS SLA, and the processor determines, based on the identifier of the NS SLA and an NSD, a VNF SLA of a VNF included in the NS, which is specifically:
obtaining the NSD of the NS, where the NSD includes information about the NS SLA, the VNF included in the NS, and an association relationship between the NS SLA and the VNF SLA;
determining, based on the identifier of the NS SLA and the NSD, the VNF SLA of the VNF included in the NS;
obtaining a Virtualized Network Function Descriptor VNFD of the VNF included in the NS, where the VNFD includes information about the VNF SLA, and an association relationship between the VNF SLA and an NFVI SLA; and
determining, based on an identifier of the VNF SLA of the VNF included in the NS and the VNFD of the VNF included in the NS, the NFVI SLA parameter of the VNF included in the NS.

Optionally, the information about the NS SLA includes the identifier, a keyword, and a specific value of the NS SLA, and the association relationship between the NS SLA and the VNF SLA includes: the identifier of the VNF SLA of the VNF included in the NS, and an association computing model of an NS SLA parameter and a VNF SLA parameter; and
the information about the VNF SLA includes the identifier, a keyword, and a specific value of the VNF SLA, and the association relationship between the VNF SLA and the NFVI SLA includes: a relationship identifier, and an association computing model of the VNF SLA parameter and the NFVI SLA parameter.

Optionally, the network service is a VNF, the network service instantiation request is a VNF instantiation request, the identifier of the SLA of the network service is an identifier of a VNF SLA, and the processor determines, based on the identifier of the NS SLA and an NSD, a VNF SLA of a VNF included in the NS, which is specifically:
obtaining a Virtualized Network Function Descriptor VNFD of the VNF, where the VNFD includes information about the VNF SLA, and an association relationship between the VNF SLA and a Network Functions Virtualization Infrastructure NFVI SLA; and
determining the NFVI SLA parameter of the VNF based on the identifier of the VNF SLA and the VNFD.

Optionally, the information about the VNF SLA includes the identifier, a keyword, and a specific value of the VNF SLA, and the association relationship between the VNF SLA and the NFVI SLA includes: a relationship identifier, and an association computing model of a VNF SLA parameter and the NFVI SLA parameter.

Optionally, the obtaining, by the processor from a Virtualized Infrastructure Manager VIM based on the NFVI SLA parameter, a virtual resource meeting a requirement of the NFVI SLA parameter is specifically:
sending a first resource request message to the VIM, where the first resource request message includes the NFVI SLA parameter; and
receiving a first resource response message sent by the VIM, where the first resource response message includes information about the virtual resource meeting the requirement of the NFVI SLA parameter.

Optionally, the obtaining, by the processor from a Virtualized Infrastructure Manager VIM based on the NFVI SLA parameter, a virtual resource meeting a requirement of the NFVI SLA parameter is specifically:
determining, based on the NFVI SLA parameter and SLA parameter information of NFVI resource pools obtained from the VIM in advance, information about the virtual resource meeting the requirement of the NFVI SLA parameter in the NFVI resource pools;
sending a second resource request message to the VIM, where the second resource request message includes the information about the virtual resource, and the second resource request message is used to query availability of the virtual resource and reserve the virtual resource; and
receiving a second resource response message sent by the VIM.

Optionally, the processor is further configured to: receive the SLA parameter information of the NFVI resource pools reported by the VIM; and group SLA parameters of virtual resources in the NFVI resource pools based on a preset grouping rule; and
the determining, based on the NFVI SLA parameter and SLA parameter information of NFVI resource pools obtained from the VIM in advance, information about the virtual resource meeting the requirement of the NFVI SLA parameter in the NFVI resource pools is specifically:
determining, based on the NFVI SLA parameter, a target group meeting the requirement of the NFVI SLA parameter in the groups.

Optionally, the preset grouping rule is performing grouping based on regions of the virtual resources or clusters of the virtual resources.

According to another aspect, an embodiment of the present invention further provides a computer program product. The computer program product includes a computer program. When being read and executed by a processor or a chip of another type, the computer program can implement the SLA-based resource allocation method provided by the foregoing embodiment of the present invention. For beneficial effects that can be achieved by the computer program product and a specific working principle of the computer program product, refer to the foregoing embodiments, and details are not described herein again.

### BRIEF DESCRIPTION OF DRAWINGS

FIG. 1 is a schematic architectural diagram of an NFV system;
FIG. 2 is a flowchart of an SLA-based resource allocation method according to Embodiment 1 of the present invention;
FIG. 3 is a signaling flowchart of an SLA-based resource allocation method according to Embodiment 2 of the present invention;
FIG. 4 is a schematic structural diagram of an NFVO according to Embodiment 3 of the present invention; and
FIG. 5 is a schematic structural diagram of an NFVO according to Embodiment 4 of the present invention.

### DESCRIPTION OF EMBODIMENTS

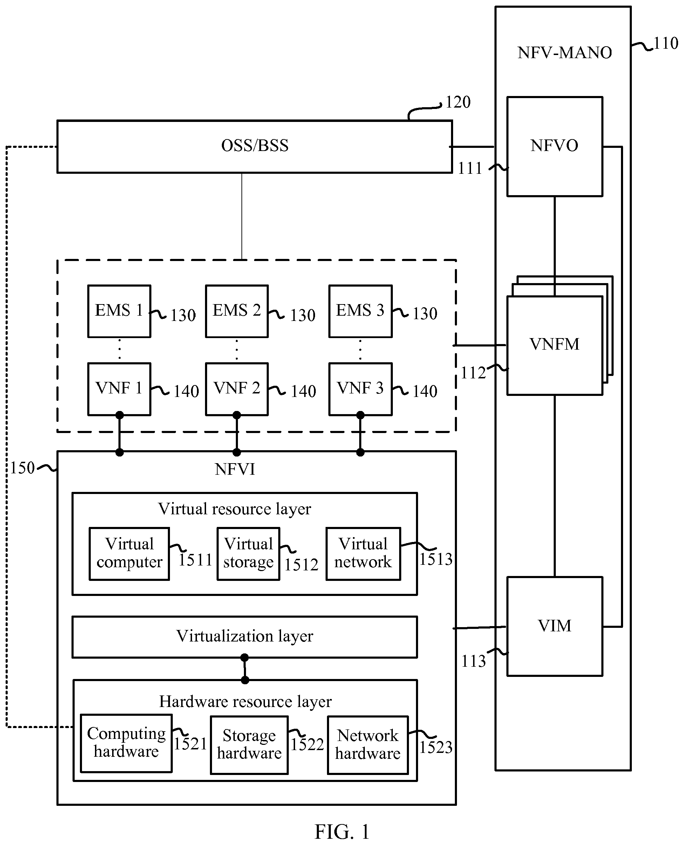

A method according to an embodiment of the present invention may be applied to an NFV system. The NFV system may implement a plurality of types of networks, for example, a Local Area Network (Local Area Network, LAN for short), an Internet Protocol (Internet Protocol, IP for short) network, or an Evolved Packet Core (Evolved Packet Core, EPC for short) network. FIG. 1 is a schematic architectural diagram of the NFV system. As shown in FIG. 1, the NFV system may include an NFV Management and Orchestration System (NFV Management and Orchestration System, NFV-MANO) 110, an NFVI 150, a VNF 140, a plurality of Element Management Systems (Element Management System, EMS) 130, and one or more Operation Support Systems/Business Support Systems (Operation Support System/Business Support System, OSS/BSS for short) 120.

The NFV-MANO 110 may include an NFVO 111, one or more VNFMs 112, and one or more VIMs 113. The NFVI 150 may include a hardware resource layer including computing hardware 1521, storage hardware 1522, and network hardware 1523, a virtualization layer, and a virtual resource layer including a virtual computer 1511 (such as a virtual machine), a virtual storage 1512, and a virtual network 1513.

The computing hardware 1521 in the hardware resource layer may be a dedicated processor or a general purpose processor such as a central processing unit (Central Process Unit, CPU for short) configured to provide processing and computing functions; the storage hardware 1522 such as a magnetic disc or a network attached storage (Network Attached Storage, NAS for short) is configured to provide a storage capability; and the network hardware 1523 may be a switch, a router, and/or another network device.

The virtualization layer in the NFVI 150 is configured to abstract a hardware resource in the hardware resource layer to decouple the VNF 140 and a physical layer to which the hardware resource belongs, so as to provide a virtual resource to the VNF.

The virtual resource layer may include the virtual computer 1511, the virtual storage 1512, and the virtual network 1513. The virtual computer 1511 and the virtual storage 1512 may be provided to the VNF 140 in a form of a virtual machine or another virtual container. For example, one VNF 140 includes one or more virtual machines. The virtualization layer forms the virtual network 1513 by abstracting the network hardware 1523. The virtual network 1513 is configured to implement communication between a plurality of virtual machines or a plurality of virtual containers of another type that bear the VNF. The virtual network may be created by using a technology such as a virtual LAN (Virtual LAN, VLAN for short), a Virtual Private Local Area Network Service (Virtual Private LAN Service, VPLS for short), a Virtual eXtensible Local Area Network (Virtual eXtensible Local Area Network, VxLAN for short), or Network Virtualization using Generic Routing Encapsulation (Network Virtualization using Generic Routing Encapsulation, NVGRE for short).

The OSS/BSS 120 mainly faces a telecommunications service operator, and provides comprehensive network management and service operation functions, including network management (such as fault monitoring and network information collection), charging management, customer service management, and the like.

The NFV-MANO 110 may be configured to implement monitoring and management of the VNF 140 and the NFVI 150. The NFVO 111 may communicate with the one or more VNFMs 112 to implement a request related to a resource, send configuration information to the VNFM 112, and collect status information of the VNF 140. Additionally, the NFVO 111 may communicate with the VIM 113 to implement resource allocation, and/or reserve and exchange configuration information and status information of virtualized hardware resources. The VNFM 112 may be configured to: manage one or more VNFs 140 and perform various management functions, for example, initiate, update, query, and/or terminate the VNF 140. The VIM 113 may be configured to control and manage interaction between the VNF 140 and the computing hardware 1521, the storage hardware 1522, the network hardware 1523, the virtual computer 1511, the virtual storage 1512, and the virtual network 1513. For example, the VIM 113 may be configured to perform an operation of allocating a resource to the VNF 140. The VNFM 112 and the VIM 113 may communicate with each other to exchange the configuration and status information of the virtualized hardware resources.

The NFVI 150 includes hardware and software. The hardware and the software jointly establish a virtualized environment to deploy, manage, and execute the VNF 140. In other words, the hardware resource layer and the virtual resource layer are configured to provide a virtual resource to the VNF 140, for example, a virtual machine and/or a virtual container in another form.

As shown in FIG. 1, the VNFM 112 may communicate with the VNF 140 and the EMS 130 to execute life cycle management of the VNF and exchange configuration/status information. The VNF 140 is virtualization of at least one Network Function, and the Network Function is provided by a physical network device previously. In an implementation, the VNF 140 may be a virtualized Mobility Management Entity (Mobility Management Entity, MME for short) node, configured to provide all Network Functions provided by a typical non-virtualized MME device. In another implementation, the VNF 140 may be configured to implement functions of some of all components provided by the non-virtualized MME device. One VNF 140 may include one or more Virtualized Network Function Components (VNF Component, VNFC for short), and the VNFC may be a virtual machine or a virtual container in another form. The EMS 130 may be configured to manage the one or more VNFs 140.

It can be learned based on descriptions of functions of composition parts in a system architecture of the NFV system, the VNFM 112 is configured to perform various management functions on the VNF 140, for example, initiate, update, query, and terminate the VNF 140. The VIM 113 is configured to control and manage interaction between the VNF 140 and other parts. Therefore, if one VNF 140 is implemented, the VNFM 112 and the VIM 113 need to work cooperatively. Therefore, the VNFM 112 and the VIM 113 can communicate with each other to exchange the configuration and status information of the virtualized hardware resources. The VNFM 112 and the VIM 113 establish a communication connection by using an interface.

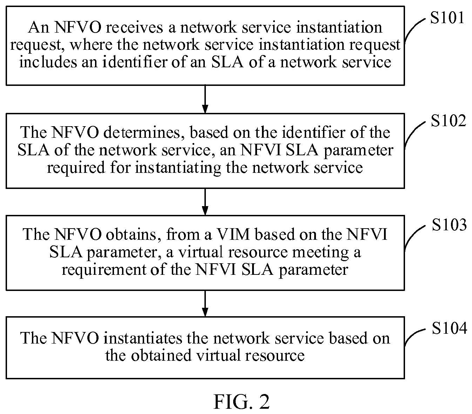

Based on the VNF system architecture shown in FIG. 1, FIG. 2 is a flowchart of an SLA-based resource allocation method. As shown in FIG. 2, the method in this embodiment may include the following steps.

Step 101: An NFVO receives a network service instantiation request, where the network service instantiation request includes an identifier (Identifier, ID for short) of a Service Level Agreement (Service Level Agreement, SLA for short) of a network service.

The network service instantiation request is used to request to instantiate the network service, and the network service instantiation request may be initiated by an operator to the NFVO, or may be initiated by another software or hardware device to the NFVO. Different from an existing network service instantiation request, in this embodiment, a new parameter is added to the network service instantiation request: the ID of the SLA of the network service. The ID of the SLA of the network service is used to identify an SLA parameter of the network service, and SLA parameters of different network services are different. Correspondingly, IDs of SLAs of different network services are different. The SLA is an internationally accepted telecommunications service evaluation standard, and is an agreement reached by an operator and a user, in which the user pays fees to request the operator to ensure particular service performance and reliability. A conventional SLA usually includes service availability and a guarantee of a customer support service, for example, circuit availability, network performance, a service response time, and service guarantee, so as to make a commitment on service quality, a charging standard, a compensation standard, and the like.

Optionally, the network service in this embodiment may be an NS or a VNF. Correspondingly, the network service instantiation request may be an NS instantiation request or a VNF instantiation request. The identifier of the SLA of the network service included in the NS instantiation request is an identifier of an NS SLA. The identifier of the SLA of the network service included in the VNF instantiation request is an identifier of a VNF SLA. The NS is a network service including a plurality of VNFs to provide a more complex function. Instantiating the NS is actually instantiating the VNFs included in the NS.

Step 102: The NFVO determines, based on the identifier of the SLA of the network service, an NFVI SLA parameter required for instantiating the network service.

When the network service is the NS, the NFVO determines, based on the identifier of the SLA of the network service, the NFVI SLA parameter required for instantiating the network service. Specifically, the NFVO obtains a Network Service Descriptor (Network Service Descriptor, NSD for short) of the NS. The NSD includes information about the NS SLA, a VNF included in the NS, and an association relationship between the NS SLA and the VNF SLA. Subsequently, the NFVO determines, based on the identifier of the NS SLA and an NSD, a VNF SLA of the VNF included in the NS, and obtains a Virtualized Network Function Descriptor (Virtualized Network Function Descriptor, VNFD for short) of the VNF included in the NS. The VNFD includes information about the VNF SLA, and an association relationship between the VNF SLA and a Network Functions Virtualization Infrastructure (NFV Infrastructure, NFVI for short) SLA. The NFVO determines, based on an identifier of the VNF SLA of the VNF included in the NS and the VNFD of the VNF included in the NS, the NFVI SLA parameter of the VNF included in the NS.

The NSD may be carried in the NS instantiation request. The NSD may further be stored in a catalog (catalog). After receiving the NS instantiation request, the NFVO parses the NS instantiation request to learn of the NS that needs to be instantiated, and then obtains the NSD from the catalog. The NSD is uploaded by an operator to the catalog by using the NFVO. The operator may further upload images of the VNFD and the VNF to the catalog. The NSD is an NS description template corresponding to the NS and may be used to describe information about the NS, for example, describe a quantity of VNFs included in the NS and links between network elements. The NSD may further include the VNFD.

The NSD is completed by the operator before deployment of the NS. The NSD includes information indicating which VNFs are included in the NS. In this embodiment, the information about the NS SLA, and the association relationship between the NS SLA and the VNF SLA are added to the NSD. The information about the NS SLA includes the identifier of the NS SLA (service _sla id), a keyword of the NS SLA (service_sla_key), and a specific value of the NS SLA (service_sla_value). The association relationship between the NS SLA and the VNF SLA includes: the identifier of the VNF SLA of the VNF included in the NS, and an association computing model of an NS SLA parameter and a VNF SLA parameter.

Table 1 is a format of an identifier of an NS SLA, the identifier of the NS SLA being a new base element (base element) added to the NSD. Table 2 is a format of information about the NS SLA. Table 3 is a format of an association relationship between the NS SLA and a VNF SLA.

**Table 1**

| Identifier (Identifier) | Type (Type) | Cardinality (Cardinality) | Description (Description) |
|---|---|---|---|
| service_level_agreement | Element | 1to N | Indicating an SLA parameter of the NS |

**Table 2**

| Identifier (Identifier) | Type (Type) | Cardinality (Cardinality) | Description (Description) |
|---|---|---|---|
| service_sla_id | Leaf | 1 | The identifier of the NS SLA |
| service_sla_key | Leaf | 1 | Description of each NS SLA |
| service_sla_value | Leaf | 1 | A specific requirement of each NS SLA |
| service_vnf_relation | Element | 1 to N | An NS-VNF SLA relationship model |

**Table 3**

| Identifier (Identifier) | Type (Type) | Cardinality (Cardinality) | Description (Description) |
|---|---|---|---|
| vnf_reference | Reference | 1 | Reference to a VNFD declared as vnfd in the Network Service via vnf:id |
| vnf_sla_id | Reference | 1 | Referring to vnf sla id defined in the VNFD |
| relation_model | Leaf | 0, 1 | Indicating a relationship between the VNF SLA parameter and the NS SLA parameter in the VNFD |

After obtaining the NSD, the NFVO determines, based on the identifier of the NS SLA and an NSD, the VNF SLA of the VNF included in the NS. Specifically, the NFVO determines, based on the identifier of the NS SLA, whether the NSD includes the information about the NS SLA. When the NSD includes the information about the NS SLA, the NFVO computes, based on an association computing model of the information about the NS SLA and the VNF SLA parameter, a VNF SLA parameter corresponding to the NS SLA parameter. When the NS includes a plurality of VNFs, the NFVO may obtain a VNF SLA of each VNF based on the association computing model.

The VNFD may be carried in the NS instantiation request. The NFVO obtains, from the NS instantiation request, the VNFD of the VNF included in the NS. The VNFD may further be stored in the catalog, and the NFVO obtains the VNFD from the catalog. The VNFD includes the information about the VNF SLA, and the association relationship between the VNF SLA and the NFVI SLA. The information about the VNF SLA includes the identifier, a keyword, and a specific value of the VNF SLA. The association relationship between the VNF SLA and the NFVI SLA includes: a relationship identifier, and an association computing model of the VNF SLA parameter and the NFVI SLA parameter.

Table 4 is a format of an identifier of a VNFD SLA, the identifier of the VNFD SLA being a new base element added to the VNFD. Table 5 is a format of information about the VNFD SLA. Table 6 is a format of an association relationship between the VNFD SLA and an NFVI SLA.

**Table 4**

| Identifier (Identifier) | Type (Type) | Cardinality (Cardinality) | Description (Description) |
|---|---|---|---|
| vnf sla_agreement | Element | 1 to N | Indicating an SLA parameter of the VNF |

**Table 5**

| Identifier (Identifier) | Type (Type) | Cardinality (Cardinality) | Description (Description) |
|---|---|---|---|
| vnf_sla_id | Leaf | 1 | An identifier of the VNF SLA |
| vnf sla_key | Leaf | 1 | Description about each VNF SLA |
| vnf sla value | Leaf | 1 | A specific requirement of each VNF SLA |
| vnf_nfvi_relation | Element | 1 to N | A VNF-NFVI SLA relationship model |

**Table 6**

| Identifier (Identifier) | Type (Type) | Cardinality (Cardinality) | Description (Description) |
|---|---|---|---|
| relation_id | Leaf | 1 | A relationship identifier |
| relation_model | Leaf | 0, 1 | Representing a relationship between the NFVI SLA parameter and the VNF SLA parameter |

After obtaining the VNFD, the NFVO determines, based on the identifier of the VNF SLA and the VNFD, the NFVI SLA parameter of the VNF included in the NS. Specifically, the NFVO first determines whether the VNFD includes the identifier of the VNF SLA. When the VNFD includes an identifier of a VNF SLA, the NFVO determines, based on an association computing model of information about the VNF SLA and the NFVI SLA parameter, an NFVI SLA parameter corresponding to a VNF SLA parameter.

When the network service is an NS, the NFVO determines, based on the identifier of the SLA of the network service, the NFVI SLA parameter required for instantiating the network service. Specifically, the NFVO obtains the VNFD of the VNF. The VNFD includes the information about the VNF SLA, and the association relationship between the VNF SLA and the NFVI SLA. The NFVO determines the NFVI SLA parameter of the VNF based on the identifier of the VNF SLA and the VNFD.

The VNFD may be carried in the VNF instantiation request or may be stored in a catalog of a VIM. The information about the VNF SLA includes the identifier, the keyword, and the specific value of the VNF SLA, and the association relationship between the VNF SLA and the NFVI SLA includes: the relationship identifier, and the association computing model of the VNF SLA parameter and the NFVI SLA parameter. For a format of the information about the VNF SLA and a format of the association relationship between the VNF SLA and the NFVI SLA, refer to the foregoing descriptions in Table 4 to Table 6.

Step 103: The NFVO obtains, from a VIM based on the NFVI SLA parameter, a virtual resource meeting a requirement of the NFVI SLA parameter.

In a first implementation, the NFVO sends a first resource request message to the VIM. The first resource request message includes the NFVI SLA parameter and further includes a quantity of required virtual resources. After receiving the first resource request message, the VIM determines, based on the NFVI SLA parameter, the virtual resource meeting the requirement of the NFVI SLA parameter, and returns a first resource response message to the NFVO. The NFVO receives the first resource response message sent by the VIM. The first resource request message includes the virtual resource meeting the requirement of the NFVI SLA parameter.

In a second implementation, the NFVO determines, based on the NFVI SLA parameter and SLA parameter information of NFVI resource pools obtained from the VIM in advance, information about the virtual resource meeting the requirement of the NFVI SLA parameter in the NFVI resource pools, and sends a second resource request message to the VIM. The second resource request message is used to query availability of the virtual resource and reserve the virtual resource. The second resource request message includes the information about the virtual resource. After receiving the second resource request message, the VIM checks, based on the information about the virtual resource, whether the virtual resource applied for by the NFVO is available. If the virtual resource applied for by the NFVO is available, the virtual resource is reserved for the NFVO, and a second resource response message is returned to the NFVO. The second resource response message includes a result of the reservation.

In the second implementation, an NFVI resource is managed by the NFVO. Correspondingly, the NFVO receives the SLA parameter information of the NFVI resource pools reported by the VIM, and groups SLA parameters of virtual resources in the NFVI resource pools based on a preset grouping rule. Subsequently, when determining, based on the NFVI SLA parameter and the SLA parameter information of the NFVI resource pools obtained from the VIM in advance, the information about the virtual resource meeting the requirement of the NFVI SLA parameter in the NFVI resource pools, the NFVO may determine, based on the NFVI SLA parameter, a target group meeting the requirement of the NFVI SLA parameter in the groups, and then apply to the target group for the virtual resource. The preset grouping rule is regions of the virtual resources or clusters (Cluster) of the virtual resources, to be specific, the NFVO may manage SLA parameters of the virtual resources based on a granularity such as the regions or the clusters of the resource pool.

Step 104: The NFVO instantiates the network service based on the obtained virtual resource.

It should be noted that, the method according to the foregoing embodiment may not only be applied to an instantiation process of the NS and the VNF, but may also be applied to a scenario of migration and scale-out of the NS and the VNF.

In the method according to this embodiment, the NFVO receives the network service instantiation request. The network service instantiation request includes the identifier of the SLA of the network service. The NFVO determines, based on the identifier of the SLA of the network service, the NFVI SLA parameter required for instantiating the network service, further obtains, from the VIM based on the NFVI SLA parameter, the virtual resource meeting the requirement of the NFVI SLA parameter, and instantiates the network service based on the obtained virtual resource. In the method, the NFVO considers the NFVI SLA parameter when applying for the virtual resource, so that the obtained virtual resource meets a user requirement and a qualification hit rate of resource application is improved.

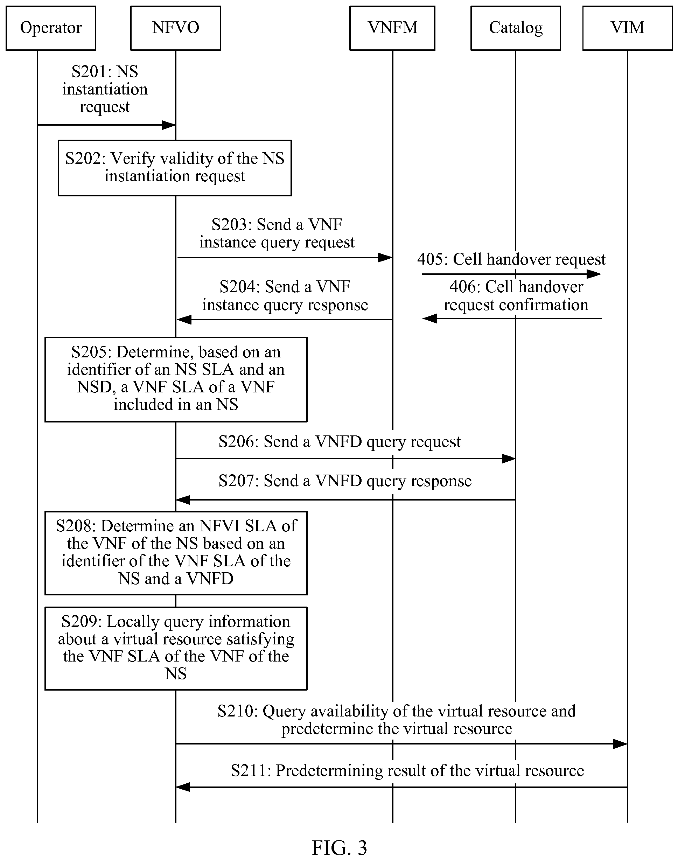

FIG. 3 is a signaling flowchart of an SLA-based resource allocation method of the present invention. As shown in FIG. 3, the method according to this embodiment may include the following steps.

S201: An operator sends an NS instantiation request to an NFVO, where the NS instantiation request includes an identifier of an NS SLA and an NSD.

S202: The NFVO verifies validity of the NS instantiation request.

The NFVO verifies the validity of the NS instantiation request and validity of an NS that needs to be instantiated.

S203: The NFVO sends a VNF instance query request to a VNFM.

The NS instantiation request further includes a VNF included in the NS. There may be a plurality of VNFs included in the NS. The VNF instance query request is used to query whether the VNF included in the NS exists. If a VNF instance exists, the VNF does not need to be instantiated; and if the VNF instance does not exist, the VNF instance needs to be further instantiated.

S204: The VNFM sends a VNF instance query response to the NFVO.

The VNF instance query response includes information indicating whether a queried VNF instance exists.

S205: The NFVO determines, based on the identifier of the NS SLA and an NSD, a VNF SLA of a VNF included in an NS.

The NSD includes information about the NS SLA, and an association relationship between the NS SLA and the VNF SLA. For a specific implementation of this step, refer to related descriptions in Embodiment 1.

S206: The NFVO sends a VNFD query request to a catalog.

The VNFD query request is used to request to query a VNFD and an image of the VNF included in the NS.

S207: The catalog sends a VNFD query response to the NFVO.

The VNFD query response includes a VNFD and an image of a queried VNF. The VNFD includes information about the VNF SLA, and an association relationship between the VNF SLA and an NFVI SLA.

It should be noted that the NFVO may alternatively query a particular VNFM for the VNFD and the image of the VNF.

S208: The NFVO determines an NFVI SLA of the VNF based on an identifier of the VNF SLA and a VNFD.

S209: The NFVO locally queries information about a virtual resource satisfying the NFVI SLA of the VNF.

S210: The NFVO queries a VIM for availability of the virtual resource and reserves the virtual resource.

S211: The VIM returns a result of the reservation for the virtual resource to the NFVO.

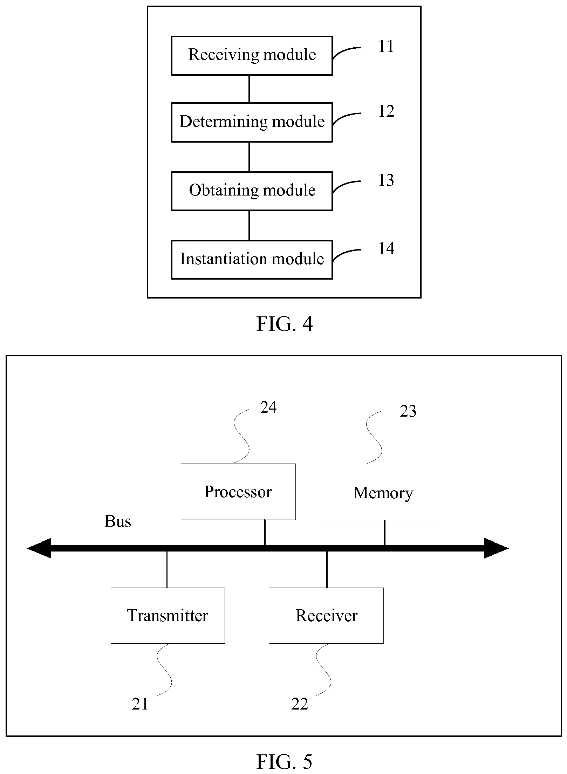

FIG. 4 is a schematic structural diagram of an NFVO according to the present invention. As shown in FIG. 4, the NFVO includes a receiving module 11, a determining module 12, an obtaining module 13, and an instantiation module 14.

The receiving module 11 is configured to receive a network service instantiation request, where the network service instantiation request includes an identifier of a Service Level Agreement SLA of a network service.

The determining module 12 is configured to determine, based on the identifier of the SLA of the network service, a Network Functions Virtualization Infrastructure NFVI SLA parameter required for instantiating the network service.

The obtaining module 13 is configured to obtain, from a Virtualized Infrastructure Manager VIM based on the NFVI SLA parameter, a virtual resource meeting a requirement of the NFVI SLA parameter.

The instantiation module 14 is configured to instantiate the network service based on the obtained virtual resource.

Optionally, the network service is a Network Service NS, the network service instantiation request is an NS instantiation request, the identifier of the SLA of the network service is an identifier of an NS SLA, and the determining module 12 is specifically configured to:
obtain a Network Service Descriptor NSD of the NS, where the NSD includes information about the NS SLA, a VNF included in the NS, and an association relationship between the NS SLA and a Virtualized Network Function VNF SLA;
determine, based on the identifier of the NS SLA and the NSD, a VNF SLA of the VNF included in the NS;
obtain a Virtualized Network Function Descriptor VNFD of the VNF included in the NS, where the VNFD includes information about the VNF SLA, and an association relationship between the VNF SLA and a Network Functions Virtualization Infrastructure NFVI SLA; and
determine, based on an identifier of the VNF SLA of the VNF included in the NS and the VNFD of the VNF included in the NS, the NFVI SLA parameter of the VNF included in the NS.

Optionally, the information about the NS SLA includes the identifier, a keyword, and a specific value of the NS SLA, and the association relationship between the NS SLA and the VNF SLA includes: the identifier of the VNF SLA of the VNF included in the NS, and an association computing model of an NS SLA parameter and a VNF SLA parameter.

The information about the VNF SLA includes the identifier, a keyword, and a specific value of the VNF SLA, and the association relationship between the VNF SLA and the NFVI SLA includes: a relationship identifier, and an association computing model of the VNF SLA parameter and the NFVI SLA parameter.

Optionally, the network service is a VNF, the network service instantiation request is a VNF instantiation request, the identifier of the SLA of the network service is an identifier of a VNF SLA, and the determining module 12 is specifically configured to:
obtain a Virtualized Network Function Descriptor VNFD of the VNF, where the VNFD includes information about the VNF SLA, and an association relationship between the VNF SLA and a Network Functions Virtualization Infrastructure NFVI SLA; and
determine the NFVI SLA parameter of the VNF based on the identifier of the VNF SLA and the VNFD.

Optionally, the obtaining module 13 is specifically configured to: send a first resource request message to the VIM, where the first resource request message includes the NFVI SLA parameter; and receive a first resource response message sent by the VIM, where the first resource response message includes information about the virtual resource meeting the requirement of the NFVI SLA parameter.

Optionally, the obtaining module 13 is specifically configured to: determine, based on the NFVI SLA parameter and SLA parameter information of NFVI resource pools obtained from the VIM in advance, information about the virtual resource meeting the requirement of the NFVI SLA parameter in the NFVI resource pools; send a second resource request message to the VIM, where the second resource request message includes the information about the virtual resource, and the second resource request message is used to query availability of the virtual resource and reserve the virtual resource; and receive a second resource response message sent by the VIM.

Optionally, the NFVO further includes a grouping module. The receiving module is further configured to receive the SLA parameter information of the NFVI resource pools reported by the VIM. The grouping module is configured to group SLA parameters of virtual resources in the NFVI resource pools based on a preset grouping rule. Correspondingly, the obtaining module 13 is specifically configured to determine, based on the NFVI SLA parameter, a target group meeting the requirement of the NFVI SLA parameter in the groups.

Optionally, the preset grouping rule is performing grouping based on regions of the virtual resources or clusters of the virtual resources.

The NFVO provided in this embodiment of the present invention may perform the foregoing method embodiment; and their implementation principles and technical effects are similar, and details are not described herein again.

FIG. 5 is a schematic structural diagram of an NFVO according to the present invention. As shown in FIG. 5, the NFVO includes a transmitter 21, a receiver 22, a memory 23, and a processor 24. The memory 23 is configured to store a program instruction, the transmitter 21 is configured to send data to another device, the receiver 22 is configured to receive data sent by the another device, and the processor 24 is configured to invoke the program instruction in the memory 23 to perform the following method:
receiving a network service instantiation request, where the network service instantiation request includes an identifier of an SLA of a network service;
determining, based on the identifier of the SLA of the network service, an NFVI SLA parameter required for instantiating the network service;
obtaining, from a VIM based on the NFVI SLA parameter, a virtual resource meeting a requirement of the NFVI SLA parameter; and
instantiating the network service based on the obtained virtual resource.

Optionally, the network service is a Network Service NS, the network service instantiation request is an NS instantiation request, the identifier of the SLA of the network service is an identifier of an NS SLA, and the processor 24 determines, based on the identifier of the NS SLA and an NSD, a VNF SLA of a VNF included in the NS, which is specifically:
obtaining the NSD of the NS, where the NSD includes information about the NS SLA, the VNF included in the NS, and an association relationship between the NS SLA and the VNF SLA;
determining, based on the identifier of the NS SLA and the NSD, the VNF SLA of the VNF included in the NS;
obtaining a Virtualized Network Function Descriptor VNFD of the VNF included in the NS, where the VNFD includes information about the VNF SLA, and an association relationship between the VNF SLA and an NFVI SLA; and
determining, based on an identifier of the VNF SLA of the VNF included in the NS and the VNFD of the VNF included in the NS, the NFVI SLA parameter of the VNF included in the NS.

Optionally, the information about the NS SLA includes the identifier, a keyword, and a specific value of the NS SLA, and the association relationship between the NS SLA and the VNF SLA includes: the identifier of the VNF SLA of the VNF included in the NS, and an association computing model of an NS SLA parameter and a VNF SLA parameter.

The information about the VNF SLA includes the identifier, a keyword, and a specific value of the VNF SLA, and the association relationship between the VNF SLA and the NFVI SLA includes: a relationship identifier, and an association computing model of the VNF SLA parameter and the NFVI SLA parameter.

Optionally, the network service is a VNF, the network service instantiation request is a VNF instantiation request, the identifier of the SLA of the network service is an identifier of a VNF SLA, and the processor 24 determines, based on the identifier of the NS SLA and an NSD, a VNF SLA of a VNF included in the NS, which is specifically:
obtaining a Virtualized Network Function Descriptor VNFD of the VNF, where the VNFD includes information about the VNF SLA, and an association relationship between the VNF SLA and a Network Functions Virtualization Infrastructure NFVI SLA; and
determining the NFVI SLA parameter of the VNF based on the identifier of the VNF SLA and the VNFD.

Optionally, the information about the VNF SLA includes the identifier, a keyword, and a specific value of the VNF SLA, and the association relationship between the VNF SLA and the NFVI SLA includes: a relationship identifier, and an association computing model of a VNF SLA parameter and the NFVI SLA parameter.

Optionally, the obtaining, by the processor 24 from a Virtualized Infrastructure Manager VIM based on the NFVI SLA parameter, a virtual resource meeting a requirement of the NFVI SLA parameter is specifically:
sending a first resource request message to the VIM, where the first resource request message includes the NFVI SLA parameter; and
receiving a first resource response message sent by the VIM, where the first resource response message includes information about the virtual resource meeting the requirement of the NFVI SLA parameter.

Optionally, the obtaining, by the processor 24 from a Virtualized Infrastructure Manager VIM based on the NFVI SLA parameter, a virtual resource meeting a requirement of the NFVI SLA parameter is specifically:
determining, based on the NFVI SLA parameter and SLA parameter information of NFVI resource pools obtained from the VIM in advance, information about the virtual resource meeting the requirement of the NFVI SLA parameter in the NFVI resource pools;
sending a second resource request message to the VIM, where the second resource request message includes the information about the virtual resource, and the second resource request message is used to query availability of the virtual resource and reserve the virtual resource; and
receiving a second resource response message sent by the VIM.

Optionally, the processor 24 is further configured to: receive the SLA parameter information of the NFVI resource pools reported by the VIM; and group SLA parameters of virtual resources in the NFVI resource pools based on a preset grouping rule; and
the determining, based on the NFVI SLA parameter and SLA parameter information of NFVI resource pools obtained from the VIM in advance, information about the virtual resource meeting the requirement of the NFVI SLA parameter in the NFVI resource pools is specifically:
determining, based on the NFVI SLA parameter, a target group meeting the requirement of the NFVI SLA parameter in the groups.

Optionally, the preset grouping rule is performing grouping based on regions of the virtual resources or clusters of the virtual resources.

In this embodiment, the transmitter 21, the receiver 22, and the memory 23 are connected to the processor 24 by using a communications bus. The communications bus is configured to implement a communication connection between elements. The communications bus may be an ISA (Industry Standard Architecture, industry standard architecture) bus, a PCI (Peripheral Component Interconnect, peripheral component interconnect) bus, an EISA (Extended Industry Standard Architecture, extended industry standard architecture) bus, or the like. The communications bus may be one or more physical lines. When there are a plurality of physical lines, the physical lines may be classified into an address bus, a data bus, a control bus, and the like. The memory 23 in this embodiment may include a high-speed RAM memory or may further include a non-volatile memory NVM such as at least one magnetic disk memory. The memory 23 may store various programs configured to complete various processing functions and implement the method steps in this embodiment. In addition, the receiver 22 in this embodiment may be a corresponding input interface having a communication function and an information receiving function. The transmitter 21 in this embodiment may be a corresponding output interface having a communication function and an information sending function. The transmitter 21 and the receiver 22 may be integrated into one communications interface or may respectively be two independent communications interfaces. The processor 24 may be, for example, a central processing unit (Central Processing Unit, CPU for short), or may be a processing chip having a service configuration command generation function and other functions.

The embodiments in this specification are all described in a progressive manner, for same or similar parts in the embodiments, refer to these embodiments, and each embodiment focuses on a difference from other embodiments. Especially, an apparatus embodiment is basically similar to a method embodiment, and therefore is described briefly; for related parts, refer to partial descriptions in the method embodiment. The described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. A person of ordinary skill in the art may understand and implement the embodiments of the present invention without creative efforts.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. An SLA-based resource allocation method, comprising:
• receiving, by a Network Functions Virtualization Orchestrator, NFVO, a network service instantiation request, wherein the network service instantiation request comprises an identifier of a Service Level Agreement SLA of a network service (S 101);
• determining, by the NFVO based on the identifier of the SLA of the network service, a Network Functions Virtualization Infrastructure, NFVI, SLA parameter required for instantiating the network service (S 102);
• obtaining, by the NFVO from a Virtualized Infrastructure Manager, VIM, based on the NFVI SLA parameter, a virtual resource meeting a requirement of the NFVI SLA parameter (S 103),
wherein the obtaining, by the NFVO from the Virtualized Infrastructure Manager, VIM, based on the NFVI SLA parameter, the virtual resource meeting the requirement of the NFVI SLA parameter comprises:
o determining, by the NFVO based on the NFVI SLA parameter and SLA parameter information of NFVI resource pools obtained from the VIM in advance, information about the virtual resource meeting the requirement of the NFVI SLA parameter in the NFVI resource pools;
o sending, by the NFVO, a resource request message to the VIM, wherein the resource request message comprises the information about the virtual resource, and the resource request message is used to query availability of the virtual resource and reserve the virtual resource; and
o receiving, by the NFVO, a resource response message sent by the VIM, the resource response message being used to indicate the reservation of the virtual resource; and
• instantiating, by the NFVO, the network service based on the obtained virtual resource (S 104).

2. The method according to claim 1, wherein the network service is a Network Service, NS, the network service instantiation request is an NS instantiation request, the identifier of the SLA of the network service is an identifier of an NS SLA, and the determining, by the NFVO based on the identifier of the SLA of the network service, the NFVI SLA parameter required for instantiating the network service comprises:
obtaining, by the NFVO, a Network Service Descriptor, NSD, of the NS, wherein the NSD comprises information about the NS SLA, VNFs comprised in the NS, and an association relationship between the NS SLA and a Virtualized Network Function, VNF, SLA;
determining, by the NFVO based on the identifier of the NS SLA and the NSD, a VNF SLA of the VNF comprised in the NS;
obtaining, by the NFVO, a Virtualized Network Function Descriptor, VNFD, of the VNF comprised in the NS, wherein the VNFD comprises information about the VNF SLA, and an association relationship between the VNF SLA and a Network Functions Virtualization Infrastructure, NFVI, SLA; and
determining, by the NFVO based on an identifier of the VNF SLA of the VNF comprised in the NS and the VNFD of the VNF comprised in the NS, the NFVI SLA parameter of the VNF comprised in the NS.

3. The method according to claim 2, wherein the information about the NS SLA comprises the identifier, a keyword, and a specific value of the NS SLA, and the association relationship between the NS SLA and the VNF SLA comprises: the identifier of the VNF SLA of the VNF comprised in the NS, and an association computing model of an NS SLA parameter and a VNF SLA parameter; and
the information about the VNF SLA comprises the identifier, a keyword, and a specific value of the VNF SLA, and the association relationship between the VNF SLA and the NFVI SLA comprises: a relationship identifier, and an association computing model of the VNF SLA parameter and the NFVI SLA parameter.

4. The method according to claim 1, wherein the network service is a Virtualized Network Function, VNF, the network service instantiation request is a VNF instantiation request, the identifier of the SLA of the network service is an identifier of a VNF SLA, and the determining, by the NFVO based on the identifier of the SLA of the network service, the NFVI SLA parameter required for instantiating the network service comprises:
obtaining, by the NFVO, a Virtualized Network Function Descriptor, VNFD, of the VNF, wherein the VNFD comprises information about the VNF SLA, and an association relationship between the VNF SLA and a Network Functions Virtualization Infrastructure, NFVI, SLA; and
determining, by the NFVO, the NFVI SLA parameter of the VNF based on the identifier of the VNF SLA and the VNFD.

5. The method according to claim 4, wherein the information about the VNF SLA comprises the identifier, a keyword, and a specific value of the VNF SLA, and the association relationship between the VNF SLA and the NFVI SLA comprises: a relationship identifier, and an association computing model of a VNF SLA parameter and the NFVI SLA parameter.

6. The method according to any one of claims 1 to 5, further comprising:
receiving, by the NFVO, the SLA parameter information of the NFVI resource pools reported by the VIM; and
grouping, by the NFVO, SLA parameters of virtual resources in the NFVI resource pools based on a preset grouping rule, wherein
the determining, by the NFVO based on the NFVI SLA parameter and SLA parameter information of NFVI resource pools obtained from the VIM in advance, information about the virtual resource meeting the requirement of the NFVI SLA parameter in the NFVI resource pools comprises:
determining, by the NFVO based on the NFVI SLA parameter, a target group meeting the requirement of the NFVI SLA parameter in the groups.

7. The method according to claim 6, wherein the preset grouping rule is performing grouping based on regions of the virtual resources or clusters of the virtual resources.

8. A Network Functions Virtualization Orchestrator, NFVO, comprising:
• a receiving module (11), configured to receive a network service instantiation request, wherein the network service instantiation request comprises an identifier of a Service Level Agreement, SLA, of a network service;
• a determining module (12), configured to determine, based on the identifier of the SLA of the network service, a Network Functions Virtualization Infrastructure, NFVI, SLA parameter required for instantiating the network service;
• an obtaining module (13), configured to obtain, from a Virtualized Infrastructure Manager, VIM, based on the NFVI SLA parameter, a virtual resource meeting a requirement of the NFVI SLA parameter, wherein the obtaining from the Virtualized Infrastructure Manager, VIM, based on the NFVI SLA parameter, the virtual resource meeting the requirement of the NFVI SLA parameter comprises:
o determining based on the NFVI SLA parameter and SLA parameter information of NFVI resource pools obtained from the VIM in advance, information about the virtual resource meeting the requirement of the NFVI SLA parameter in the NFVI resource pools;
o sending a resource request message to the VIM, wherein the resource request message comprises the information about the virtual resource, and the resource request message is used to query availability of the virtual resource and reserve the virtual resource; and
o receiving a resource response message sent by the VIM, the resource response message being used to indicate the reservation of the virtual resource; and
• an instantiation module (14), configured to instantiate the network service based on the obtained virtual resource.

9. The NFVO according to claim 8, wherein the network service is a Network Service, NS, the network service instantiation request is an NS instantiation request, the identifier of the SLA of the network service is an identifier of an NS SLA, and the determining module is specifically configured to:
obtain a Network Service Descriptor, NSD, of the NS, wherein the NSD comprises information about the NS SLA, a VNF comprised in the NS, and an association relationship between the NS SLA and a Virtualized Network Function VNF SLA;
determine, based on the identifier of the NS SLA and the NSD, a VNF SLA of the VNF comprised in the NS;
obtain a Virtualized Network Function Descriptor, VNFD, of the VNF comprised in the NS, wherein the VNFD comprises information about the VNF SLA, and an association relationship between the VNF SLA and a Network Functions Virtualization Infrastructure, NFVI, SLA; and
determine, based on an identifier of the VNF SLA of the VNF comprised in the NS and
the VNFD of the VNF comprised in the NS, the NFVI SLA parameter of the VNF comprised in the NS.

10. The NFVO according to claim 9, wherein the information about the NS SLA comprises the identifier, a keyword, and a specific value of the NS SLA, and the association relationship between the NS SLA and the VNF SLA comprises: the identifier of the VNF SLA of the VNF comprised in the NS, and an association computing model of an NS SLA parameter and a VNF SLA parameter; and
the information about the VNF SLA comprises the identifier, a keyword, and a specific value of the VNF SLA, and the association relationship between the VNF SLA and the NFVI SLA comprises: a relationship identifier, and an association computing model of the VNF SLA parameter and the NFVI SLA parameter.

11. The NFVO according to claim 8, wherein the network service is a Virtualized Network Function, VNF, the network service instantiation request is a VNF instantiation request, the identifier of the SLA of the network service is an identifier of a VNF SLA, and the determining module is specifically configured to:
obtain a Virtualized Network Function Descriptor, VNFD, of the VNF, wherein the VNFD comprises information about the VNF SLA, and an association relationship between the VNF SLA and a Network Functions Virtualization Infrastructure NFVI SLA; and
determine the NFVI SLA parameter of the VNF based on the identifier of the VNF SLA and the VNFD.

12. The NFVO according to claim 11, wherein the information about the VNF SLA comprises the identifier, a keyword, and a specific value of the VNF SLA, and the association relationship between the VNF SLA and the NFVI SLA comprises: a relationship identifier, and an association computing model of a VNF SLA parameter and the NFVI SLA parameter.

## Patentansprüche

1. SLA-basiertes Ressourcenzuweisungsverfahren, das Folgendes umfasst:
• Empfangen einer Netzdienstaufrufanforderung durch einen "Network Functions Virtualization Orchestrator", NFVO, wobei die Netzdienstaufrufanforderung eine ID eines "Service Level Agreement", SLA, eines Netzdienstes umfasst (S 101);
• Bestimmen eines zum Aufrufen des Netzdienstes erforderlichen NFVI-SLA-Parameters (NFVI = "Network Functions Virtualization Infrastructure") durch den NFVO basierend auf der ID des SLA des Netzdienstes (S 102);
• Erhalten einer virtuellen Ressource, die eine Bedingung des NFVI-SLA-Parameters erfüllt, durch den NFVO von einem "Virtualized Infrastructure Manager", VIM, basierend auf dem NFVI-SLA-Parameter (S 103),
wobei das Erhalten der virtuellen Ressource, die die Bedingung des NFVI-SLA-Parameters erfüllt, durch den NFVO von dem "Virtualized Infrastructure Manager", VIM, basierend auf dem NFVI-SLA-Parameter Folgendes umfasst:
∘ Bestimmen von Informationen über die virtuelle Ressource, die die Bedingung des NFVI-SLA-Parameters erfüllt, in den NFVI-Ressourcenpools durch den NFVO basierend auf dem NFVI-SLA-Parameter und SLA-Parameterinformationen der NFVI-Ressourcenpools, die von dem VIM zuvor erhalten werden;
∘ Senden einer Ressourcenanforderungsnachricht durch den NFVO an den VIM, wobei die Ressourcenanforderungsnachricht die Informationen über die virtuelle Ressource umfasst und die Ressourcenanforderungsnachricht zum Abfragen der Verfügbarkeit der virtuellen Ressource und Reservieren der virtuellen Ressource genutzt wird; und
∘ Empfangen einer durch den VIM gesendeten Ressourcenantwortnachricht durch den NFVO, wobei die Ressourcenantwortnachricht zum Angeben der Reservierung der virtuellen Ressource genutzt wird; und
• Aufrufen des Netzdienstes durch den NFVO basierend auf der erhaltenen virtuellen Ressource (S 104).

2. Verfahren nach Anspruch 1, wobei der Netzdienst ein "Network Service", NS, ist, die Netzdienstaufrufanforderung eine NS-Aufrufanforderung ist, die ID des SLA des Netzdienstes eine ID eines NS-SLA ist und das Bestimmen des zum Aufrufen des Netzdienstes erforderlichen NFVI-SLA-Parameters durch den NFVO basierend auf der ID des SLA des Netzdienstes Folgendes umfasst:
Erhalten eines "Network Service Descriptor", NSD, des NS durch den NFVO, wobei der NSD Informationen über das NS-SLA, in dem NS umfasste VNFs und eine Zuordnungsbeziehung zwischen dem NS-SLA und einem VNF-SLA (VNF = "Virtualized Network Function") umfasst;
Bestimmen eines VNF-SLA der in dem NS umfassten VNF durch den NFVO basierend auf der ID des NS-SLA und dem NSD;
Erhalten eines "Virtualized Network Function Descriptor", VNFD, der in dem NS umfassten VNF durch den NFVO, wobei der VNFD Informationen über das VNF-SLA und eine Zuordnungsbeziehung zwischen dem VNF-SLA und einem NFVI-SLA (NFVI = "Network Functions Virtualization Infrastructure") umfasst; und
Bestimmen des NFVI-SLA-Parameters der in dem NS umfassten VNF durch den NFVO basierend auf einer ID des VNF-SLA der in dem NS umfassten VNF und dem VNFD der in dem NS umfassten VNF.

3. Verfahren nach Anspruch 2, wobei die Informationen über das NS-SLA die ID, ein Schlüsselwort und einen bestimmten Wert des NS-SLA umfassen und die Zuordnungsbeziehung zwischen dem NS-SLA und dem VNF-SLA Folgendes umfasst: die ID des VNF-SLA der in dem NS umfassten VNF und ein Zuordnungsrechenmodell eines NS-SLA-Parameters und eines VNF-SLA-Parameters; und
die Informationen über das VNF-SLA die ID, ein Schlüsselwort und einen bestimmten Wert des VNF-SLA umfassen und die Zuordnungsbeziehung zwischen dem VNF-SLA und dem NFVI-SLA Folgendes umfasst: eine Beziehungs-ID und ein Zuordnungsrechenmodell des VNF-SLA-Parameters und des NFVI-SLA-Parameters.

4. Verfahren nach Anspruch 1, wobei der Netzdienst eine "Virtualized Network Function", VNF, ist, die Netzdienstaufrufanforderung eine VNF-Aufrufanforderung ist, die ID des SLA des Netzdienstes eine ID eines VNF-SLA ist und das Bestimmen des zum Aufrufen des Netzdienstes erforderlichen NFVI-SLA-Parameters durch den NFVO basierend auf der ID des SLA des Netzdienstes Folgendes umfasst:
Erhalten eines "Virtualized Network Function Descriptor", VNFD, der VNF durch den NFVO, wobei der VNFD Informationen über das VNF-SLA und eine Zuordnungsbeziehung zwischen dem VNF-SLA und einem NFVI-SLA (NFVI = "Network Functions Virtualization Infrastructure") umfasst; und
Bestimmen des NFVI-SLA-Parameters der VNF durch den NFVO basierend auf der ID des VNF-SLA und dem VNFD.

5. Verfahren nach Anspruch 4, wobei die Informationen über das VNF-SLA die ID, ein Schlüsselwort und einen bestimmten Wert des VNF-SLA umfassen und die Zuordnungsbeziehung zwischen dem VNF-SLA und dem NFVI-SLA Folgendes umfasst: eine Beziehungs-ID und ein Zuordnungsrechenmodell eines VNF-SLA-Parameters und des NFVI-SLA-Parameters.

6. Verfahren nach einem der Ansprüche 1 bis 5, das ferner Folgendes umfasst:
Empfangen der SLA-Parameterinformationen der NFVI-Ressourcenpools, die durch den VIM gemeldet werden, durch den NFVO; und
Gruppieren von SLA-Parametern virtueller Ressourcen in den NFVI-Ressourcenpools durch den NFVO basierend auf einer vorgegebenen Gruppierungsregel, wobei das Bestimmen von Informationen über die virtuelle Ressource, die die Bedingung des NFVI-SLA-Parameters erfüllt, in den NFVI-Ressourcenpools durch den NFVO basierend auf dem NFVI-SLA-Parameter und SLA-Parameterinformationen der NFVI-Ressourcenpools, die von dem VIM zuvor erhalten werden, Folgendes umfasst: Bestimmen einer Zielgruppe, die die Bedingung des NFVI-SLA-Parameters erfüllt, in den Gruppen durch den NFVO basierend auf dem NFVI-SLA-Parameter.

7. Verfahren nach Anspruch 6, wobei die vorgegebene Gruppierungsregel in der Durchführung einer Gruppierung basierend auf Regionen der virtuellen Ressourcen oder Clustern der virtuellen Ressourcen besteht.

8. "Network Functions Virtualization Orchestrator", NFVO, der Folgendes umfasst:
• ein Empfangsmodul (11), das zum Empfangen einer Netzdienstaufrufanforderung konfiguriert ist, wobei die Netzdienstaufrufanforderung eine ID eines "Service Level Agreement", SLA, eines Netzdienstes umfasst;
• ein Bestimmungsmodul (12), das zum Bestimmen eines zum Aufrufen des Netzdienstes erforderlichen NFVI-SLA-Parameters (NFVI = "Network Functions Virtualization Infrastructure") basierend auf der ID des SLA des Netzdienstes konfiguriert ist;
• ein Erhaltemodul (13), das zum Erhalten einer virtuellen Ressource, die eine Bedingung des NFVI-SLA-Parameters erfüllt, von einem "Virtualized Infrastructure Manager", VIM, basierend auf dem NFVI-SLA-Parameter konfiguriert ist, wobei das Erhalten der virtuellen Ressource, die die Bedingung des NFVI-SLA-Parameters erfüllt, von dem "Virtualized Infrastructure Manager", VIM, basierend auf dem NFVI-SLA-Parameter Folgendes umfasst:
o Bestimmen von Informationen über die virtuelle Ressource, die die Bedingung des NFVI-SLA-Parameters erfüllt, in den NFVI-Ressourcenpools basierend auf dem NFVI-SLA-Parameter und SLA-Parameterinformationen der NFVI-Ressourcenpools, die von dem VIM zuvor erhalten werden;
∘ Senden einer Ressourcenanforderungsnachricht an den VIM, wobei die Ressourcenanforderungsnachricht die Informationen über die virtuelle Ressource umfasst und die Ressourcenanforderungsnachricht zum Abfragen der Verfügbarkeit der virtuellen Ressource und Reservieren der virtuellen Ressource genutzt wird; und
∘ Empfangen einer durch den VIM gesendeten Ressourcenantwortnachricht, wobei die Ressourcenantwortnachricht zum Angeben der Reservierung der virtuellen Ressource genutzt wird; und
• ein Aufrufmodul (14), das zum Aufrufen des Netzdienstes basierend auf der erhaltenen virtuellen Ressource konfiguriert ist.

9. NFVO nach Anspruch 8, wobei der Netzdienst ein "Network Service", NS, ist, die Netzdienstaufrufanforderung eine NS-Aufrufanforderung ist, die ID des SLA des Netzdienstes eine ID eines NS-SLA ist und das Bestimmungsmodul speziell für Folgendes konfiguriert ist:
Erhalten eines "Network Service Descriptor", NSD, des NS, wobei der NSD Informationen über das NS-SLA, eine in dem NS umfasste VNF und eine Zuordnungsbeziehung zwischen dem NS-SLA und einem VNF-SLA (VNF = "Virtualized Network Function") umfasst;
Bestimmen eines VNF-SLA der in dem NS umfassten VNF basierend auf der ID des NS-SLA und dem NSD;
Erhalten eines "Virtualized Network Function Descriptor", VNFD, der in dem NS umfassten VNF, wobei der VNFD Informationen über das VNF-SLA und eine Zuordnungsbeziehung zwischen dem VNF-SLA und einem NFVI-SLA (NFVI = "Network Functions Virtualization Infrastructure") umfasst; und
Bestimmen des NFVI-SLA-Parameters der in dem NS umfassten VNF basierend auf einer ID des VNF-SLA der in dem NS umfassten VNF und dem VNFD der in dem NS umfassten VNF

10. NFVO nach Anspruch 9, wobei die Informationen über das NS-SLA die ID, ein Schlüsselwort und einen bestimmten Wert des NS-SLA umfassen und die Zuordnungsbeziehung zwischen dem NS-SLA und dem VNF-SLA Folgendes umfasst: die ID des VNF-SLA der in dem NS umfassten VNF und ein Zuordnungsrechenmodell eines NS-SLA-Parameters und eines VNF-SLA-Parameters; und
die Informationen über das VNF-SLA die ID, ein Schlüsselwort und einen bestimmten Wert des VNF-SLA umfassen und die Zuordnungsbeziehung zwischen dem VNF-SLA und dem NFVI-SLA Folgendes umfasst: eine Beziehungs-ID und ein Zuordnungsrechenmodell des VNF-SLA-Parameters und des NFVI-SLA-Parameters.

11. NFVO nach Anspruch 8, wobei der Netzdienst eine "Virtualized Network Function", VNF, ist, die Netzdienstaufrufanforderung eine VNF-Aufrufanforderung ist, die ID des SLA des Netzdienstes eine ID eines VNF-SLA ist und das Bestimmungsmodul speziell für Folgendes konfiguriert ist:
Erhalten eines "Virtualized Network Function Descriptor", VNFD, der VNF, wobei der VNFD Informationen über das VNF-SLA und eine Zuordnungsbeziehung zwischen dem VNF-SLA und einem NFVI-SLA (NFVI = "Network Functions Virtualization Infrastructure") umfasst; und
Bestimmen des NFVI-SLA-Parameters der VNF basierend auf der ID des VNF-SLA und dem VNFD.

12. NFVO nach Anspruch 11, wobei die Informationen über das VNF-SLA die ID, ein Schlüsselwort und einen bestimmten Wert des VNF-SLA umfassen und die Zuordnungsbeziehung zwischen dem VNF-SLA und dem NFVI-SLA Folgendes umfasst: eine Beziehungs-ID und ein Zuordnungsrechenmodell eines VNF-SLA-Parameters und des NFVI-SLA-Parameters.

## Revendications

1. Procédé d'attribution de ressource à base de SLA, comprenant :
• la réception, par un orchestrateur de virtualisation de fonctions de réseau, NFVO, d'une demande d'instanciation de service de réseau, dans lequel la demande d'instanciation de service de réseau comprend un identifiant d'un accord de niveau de service, SLA, d'un service de réseau (S101);
• la détermination, par le NFVO, sur la base de l'identifiant du SLA du service de réseau, d'un paramètre de SLA d'infrastructure de virtualisation de fonctions de réseau, NFVI, exigé pour instancier le service de réseau (S 102) ;
• l'obtention, par le NFVO, à partir d'un gestionnaire d'infrastructure virtualisé, VIM, sur la base du paramètre de SLA de NFVI, d'une ressource virtuelle satisfaisant à une exigence du paramètre de SLA de NFVI (S 103),
dans lequel l'obtention, par le NFVO, à partir du gestionnaire d'infrastructure virtualisé, VIM, sur la base du paramètre de SLA de NFVI, de la ressource virtuelle satisfaisant à l'exigence du paramètre de SLA de NFVI comprend :
∘ la détermination, par le NFVO, sur la base du paramètre de SLA de NFVI et d'informations de paramètre de SLA de réserves de ressources de NFVI obtenues à partir du VIM d'avance, d'informations concernant la ressource virtuelle satisfaisant à l'exigence du paramètre de SLA de NFVI dans les réserves de ressources de NFVI ;
∘ l'envoi, par le NFVO, d'un message de demande de ressource au VIM, dans lequel le message de demande de ressource comprend les informations concernant la ressource virtuelle, et le message de demande de ressource est utilisé pour effectuer une interrogation en ce qui concerne la disponibilité de la ressource virtuelle et réserver la ressource virtuelle ; et
∘ la réception, par le NFVO, d'un message de réponse de ressource envoyé par le VIM, le message de réponse de ressource étant utilisé pour indiquer la réservation de la ressource virtuelle ; et
• l'instanciation, par le NFVO, du service de réseau sur la base de la ressource virtuelle obtenue (S104).

2. Procédé selon la revendication 1, dans lequel le service de réseau est un service de réseau, NS, la demande d'instanciation de service de réseau est une demande d'instanciation de NS, l'identifiant du SLA du service de réseau est un identifiant d'un SLA de NS, et la détermination, par le NFVO, sur la base de l'identifiant du SLA du service de réseau, du paramètre de SLA de NFVI exigé pour instancier le service de réseau comprend :
l'obtention, par le NFVO, d'un descripteur de service de réseau, NSD, du NS, dans lequel le NSD comprend des informations concernant le SLA de NS, des VNFs comprises dans le NS, et une relation d'association entre le SLA de NS et un SLA de fonction de réseau virtualisée, VNF ;
la détermination, par le NFVO, sur la base de l'identifiant du SLA de NS et du NSD, d'un SLA de VNF de la VNF comprise dans le NS ;
l'obtention, par le NFVO, d'un descripteur de fonction de réseau virtualisée, VNFD, de la VNF comprise dans le NS, dans lequel le VNFD comprend des informations concernant le SLA de VNF, et une relation d'association entre le SLA de VNF et un SLA d'infrastructure de virtualisation de fonctions de réseau, NFVI ; et
la détermination, par le NFVO, sur la base d'un identifiant du SLA de VNF de la VNF comprise dans le NS et du VNFD de la VNF comprise dans le NS, du paramètre de SLA de NFVI de la VNF comprise dans le NS.

3. Procédé selon la revendication 2, dans lequel les informations concernant le SLA de NS comprennent l'identifiant, un mot clef, et une valeur spécifique du SLA de NS, et la relation d'association entre le SLA de NS et le SLA de VNF comprend : l'identifiant du SLA de VNF de la VNF comprise dans le NS, et un modèle informatique d'association d'un paramètre de SLA de NS et d'un paramètre de SLA de VNF ; et les informations concernant le SLA de VNF comprennent l'identifiant, un mot clef, et une valeur spécifique du SLA de VNF, et la relation d'association entre le SLA de VNF et le SLA de NFVI comprend : un identifiant de relation, et un modèle informatique d'association du paramètre de SLA de VNF et du paramètre de SLA de NFVI.

4. Procédé selon la revendication 1, dans lequel le service de réseau est une fonction de réseau virtualisée, VNF, la demande d'instanciation de service de réseau est une demande d'instanciation de VNF, l'identifiant du SLA du service de réseau est un identifiant d'un SLA de VNF, et la détermination, par le NFVO, sur la base de l'identifiant du SLA du service de réseau, du paramètre de SLA de NFVI exigé pour instancier le service de réseau comprend :
l'obtention, par le NFVO, d'un descripteur de fonction de réseau virtualisée, VNFD, de la VNF, dans lequel le VNFD comprend des informations concernant le SLA de VNF, et une relation d'association entre le SLA de VNF et un SLA d'infrastructure de virtualisation de fonctions de réseau, NFVI ; et
la détermination, par le NFVO, du paramètre de SLA de NFVI de la VNF sur la base de l'identifiant du SLA de VNF et du VNFD.

5. Procédé selon la revendication 4, dans lequel les informations concernant le SLA de VNF comprennent l'identifiant, un mot clef, et une valeur spécifique du SLA de VNF, et la relation d'association entre le SLA de VNF et le SLA de NFVI comprend : un identifiant de relation, et un modèle informatique d'association d'un paramètre de SLA de VNF et du paramètre de SLA de NFVI.

6. Procédé selon l'une quelconque des revendications 1 à 5, comprenant en outre :
la réception, par le NFVO, des informations de paramètre de SLA des réserves de ressources de NFVI rapportées par le VIM ; et
le groupement, par le NFVO, de paramètres de SLA de ressources virtuelles dans les réserves de ressources de NFVI sur la base d'une règle de groupement prédéfinie, dans lequel
la détermination, par le NFVO, sur la base du paramètre de SLA de NFVI et d'informations de paramètre de SLA de réserves de ressources de NFVI obtenues d'avance à partir du VIM, d'informations concernant la ressource virtuelle satisfaisant à l'exigence du paramètre de SLA de NFVI dans les réserves de ressources de NFVI comprend :
la détermination, par le NFVO sur la base du paramètre de SLA de NFVI, d'un groupe cible satisfaisant à l'exigence du paramètre de SLA de NFVI dans les groupes.

7. Procédé selon la revendication 6, dans lequel la règle de groupement prédéfinie est la réalisation d'un groupement sur la base de régions des ressources virtuelles ou de grappes des ressources virtuelles.

8. Orchestrateur de virtualisation de fonctions de réseau, NFVO, comprenant :
• un module de réception (11), configuré pour recevoir une demande d'instanciation de service de réseau, dans lequel la demande d'instanciation de service de réseau comprend un identifiant d'un accord de niveau de service, SLA, d'un service de réseau ;
• un module de détermination (12), configuré pour déterminer, sur la base de l'identifiant du SLA du service de réseau, un paramètre de SLA d'infrastructure de virtualisation de fonctions de réseau, NFVI, exigé pour instancier le service de réseau ;
• un module d'obtention (13), configuré pour obtenir, à partir d'un gestionnaire d'infrastructure virtualisé, VIM, sur la base du paramètre de SLA de NFVI, une ressource virtuelle satisfaisant à une exigence du paramètre de SLA de NFVI, dans lequel l'obtention, à partir du gestionnaire d'infrastructure virtualisé, VIM, sur la base du paramètre de SLA de NFVI, de la ressource virtuelle satisfaisant à l'exigence du paramètre de SLA de NFVI comprend :
∘ la détermination, sur la base du paramètre de SLA de NFVI et d'informations de paramètre de SLA de réserves de ressources de NFVI obtenues d'avance à partir du VIM, d'informations concernant la ressource virtuelle satisfaisant à l'exigence du paramètre de SLA de NFVI dans les réserves de ressources de NFVI;
∘ l'envoi d'un message de demande de ressource au VIM, dans lequel le message de demande de ressource comprend les informations concernant la ressource virtuelle, et le message de demande de ressource est utilisé pour effectuer une interrogation en ce qui concerne la disponibilité de la ressource virtuelle et réserver la ressource virtuelle ; et
∘ la réception d'un message de réponse de ressource envoyé par le VIM, le message de réponse de ressource étant utilisé pour indiquer la réservation de la ressource virtuelle ; et
• un module d'instanciation (14), configuré pour instancier le service de réseau sur la base de la ressource virtuelle obtenue.

9. NFVO selon la revendication 8, dans lequel le service de réseau est un service de réseau, NS, la demande d'instanciation de service de réseau est une demande d'instanciation de NS, l'identifiant du SLA du service de réseau est un identifiant d'un SLA de NS, et le module de détermination est spécifiquement configuré pour :
obtenir un descripteur de service de réseau, NSD, du NS, dans lequel le NSD comprend des informations concernant le SLA de NS, une VNF comprise dans le NS, et une relation d'association entre le SLA de NS et un SLA de fonction de réseau virtualisée VNF ;
déterminer, sur la base de l'identifiant du SLA de NS et du NSD, un SLA de VNF de la VNF comprise dans le NS ;
obtenir un descripteur de fonction de réseau virtualisée, VNFD, de la VNF comprise dans le NS, dans lequel le VNFD comprend des informations concernant le SLA de VNF, et une relation d'association entre le SLA de VNF et un SLA d'infrastructure de virtualisation de fonctions de réseau, NFVI ; et
déterminer, sur la base d'un identifiant du SLA de VNF de la VNF comprise dans le NS et du VNFD de la VNF comprise dans le NS, le paramètre de SLA de NFVI de la VNF comprise dans le NS.

10. NFVO selon la revendication 9, dans lequel les informations concernant le SLA de NS comprennent l'identifiant, un mot clef, et une valeur spécifique du SLA de NS, et la relation d'association entre le SLA de NS et le SLA de VNF comprend :
l'identifiant du SLA de VNF de la VNF comprise dans le NS, et un modèle informatique d'association d'un paramètre de SLA de NS et d'un paramètre de SLA de VNF ; et
les informations concernant le SLA de VNF comprennent l'identifiant, un mot clef, et
une valeur spécifique du SLA de VNF, et la relation d'association entre le SLA de VNF et le SLA de NFVI comprennent : un identifiant de relation, et un modèle informatique d'association du paramètre de SLA de VNF et du paramètre de SLA de NFVI.

11. NFVO selon la revendication 8, dans lequel le service de réseau est une fonction de réseau virtualisée, VNF, la demande d'instanciation de service de réseau est une demande d'instanciation de VNF, l'identifiant du SLA du service de réseau est un identifiant d'un SLA de VNF, et le module de détermination est spécifiquement configuré pour :
obtenir un descripteur de fonction de réseau virtualisée, VNFD, de la VNF, dans lequel le VNFD comprend des informations concernant le SLA de VNF, et une relation d'association entre le SLA de VNF et un SLA d'infrastructure de virtualisation de fonctions de réseau, NFVI ; et
déterminer le paramètre de SLA de NFVI de la VNF sur la base de l'identifiant du SLA de VNF et du VNFD.

12. NFVO selon la revendication 11, dans lequel les informations concernant le SLA de VNF comprennent l'identifiant, un mot clef, et une valeur spécifique du SLA de VNF, et la relation d'association entre le SLA de VNF et le SLA de NFVI comprend : un identifiant de relation, et un modèle informatique d'association d'un paramètre de SLA de VNF et du paramètre de SLA de NFVI.
